# FASCICULE DE BREVET EUROPEEN

(11) **EP 4 073 597 B1**
(45) Date de publication et mention de la délivrance du brevet: **26.07.2023**
(21) Numéro de dépôt: 20817441.7
(22) Date de dépôt: 09.12.2020
(51) Int. Cl.: G04G 17/02, G04B 37/02, G04B 37/22, G04G 17/08, G04B 47/00

(54) **MONTRE COMPRENANT UN ELEMENT DE FILTRAGE OPTIQUE ET UN DISPOSITIF DE DEWAR**
ARMBAND, DAS EIN OPTISCHES FILTERELEMENT UND EINEN DEWAR GERÄT UMFASST
WATCH COMPRISING AN ELEMENT FOR OPTICAL FILTERING AND A DEWAR DEVICE

(30) Priorité: 09.12.2019 EP 19214444
(43) Date de publication de la demande: 19.10.2022
(73) Titulaire: Omega SA, 2502 Bienne (CH)
(72) Inventeur: FRANZI, Edoardo, 1400 Cheseaux-Noréaz (CH); DUNBAR, Andrea, 2072 St-Blaise (CH); STADELMANN, Patrick, 2017 Boudry (CH)
(74) Mandataire: ICB SA
(86) Numéro de dépôt international: PCT/EP2020/085360
(87) Numéro de publication internationale: WO 2021/116220

(56) Documents cités:
- EP-A1- 1 168 112
- WO-A1-2014/120194
- CN-A- 106 325 041
- JP-U- S5 048 682
- US-A- 3 030 763
- US-A1- 2014 160 904
- US-A1- 2018 063 981
- US-A1- 2018 070 468

## Description

### Domaine technique

L'invention concerne une montre comprenant un élément de filtrage optique.

### Arrière-plan technologique

Une montre comprend classiquement un bracelet et une boîte de montre dans laquelle est agencé un mouvement mécanique ou encore un mouvement électronique à quartz. Il est connu que de tels mouvements sont souvent très sensibles aux variations de température qui peuvent être à l'origine de nombreux disfonctionnements ainsi que de dégradations de la préservation de ces derniers. A titre d'exemple, une augmentation de température peut provoquer une dilatation des matériaux constituant notamment les ressorts et le balancier d'un mouvement mécanique. Une telle dilatation engendre alors une modification de la raideur du ressort et l'inertie du balancier ce qui provoque un changement de fréquence du mécanisme. Dans ce contexte, pour éviter de tels disfonctionnements, il est connu d'utiliser des mécanismes de compensation de l'effet de ces variations de température sur la marche de ces mouvements qui ne sont pas toujours très efficients.

On connait aussi dans l'état de la technique le document CN106325041A qui décrit une montre comprenant un boitier isotherme dans lequel sont agencés les composants de ladite montre.

On comprend qu'il existe un besoin de trouver une solution, notamment qui ne présente pas les inconvénients de l'art antérieur.

### Résumé de l'invention

Dans ce dessein, l'invention concerne une montre telle que définie dans la revendication indépendante 1.

Grâce à la présence dans la boîte de montre d'au moins un dispositif de Dewar qui encapsule les composants électriques ou électroniques de la montre et de l'élément de filtrage, de tels composants sont protégés d'éventuelles températures extrêmes à l'extérieur pouvant être compris entre -150 et +125 degrés Celsius. Une telle configuration de montre permet ainsi d'utiliser des composants électriques ou électroniques standard dans des contextes et des environnements où les températures peuvent être extrêmes, tels que par exemple des missions spatiales ou lunaires. Ceci permet ainsi une rationalisation des coûts ainsi que de maintenir une complexité raisonnable pour les composants utilisés dans la montre pour de telles missions. De plus, la présence dans la boîte de montre d'un tel élément de filtrage optique, la quantité d'énergie rayonnante ou radiative susceptible de pénétrer dans la montre est fortement limitée. Ainsi, des composants électriques ou électroniques de la montre compris dans la boîte de cette montre sont protégés de températures qui seraient susceptibles de les endommager.

Dans d'autres modes de réalisation de cette montre :
- l'élément de filtrage optique est un filtre interférométrique ;
- le filtre interférométrique comprend un grillage ou un treillis présentant un maillage dont les dimensions sont telles qu'elles ne laissent passer que certaines longueurs d'onde prédéterminées du spectre électromagnétique ;

- le filtre interférométrique comprend un filtre plasmonique ;
- le dispositif de Dewar est formé en tout ou partie par la boîte de montre et renferme au moins un desdits composants électriques ou électroniques ;
- le dispositif de Dewar comprend les pièces suivantes de la boîte de montre délimitant ledit volume : une carrure, une glace et un fond ;
- la carrure et le fond de la boîte forme une pièce monobloc, ladite pièce définissant une ouverture opposée au fond qui est susceptible d'être refermée par la glace de ladite montre notamment de manière amovible ;
- la carrure et la glace de la boîte de montre forment une pièce monobloc, ladite pièce définissant une ouverture opposée à la glace qui est susceptible d'être refermée par le fond de ladite montre notamment de de manière amovible ;
- le dispositif de Dewar comprend deux parois interne et externe minces imbriquées l'une dans l'autre, la paroi interne délimitant le volume à l'intérieur duquel est agencé le ou chaque composant électrique ou électronique, la paroi externe qui est agencée du côté extérieur de la montre, l'espace sous vide ou quasi sous vide séparant la paroi interne de la paroi externe ;
- ledit au moins un composant électrique ou électronique est choisi parmi le groupe consistant en : un dispositif d'affichage, un processeur, une mémoire, un composant de stockage d'énergie, un moteur, un circuit intégré et un oscillateur électronique ;
- la montre est une montre à quartz.

### Brève description des figures

D'autres particularités et avantages ressortiront clairement de la description qui en est faite ci-après, à titre indicatif et nullement limitatif, en référence aux figures annexées, dans lesquelles :
- la figure 1 est une représentation schématique d'une vue de dessus d'une montre dont une boîte comprend notamment un élément de filtrage optique, selon un mode de réalisation de l'invention, et
- la figure 2 est une vue en coupe selon l'axe II-II de la représentation schématique de la montre de la figure 1, selon le mode de réalisation de l'invention.

### Description détaillée de l'invention

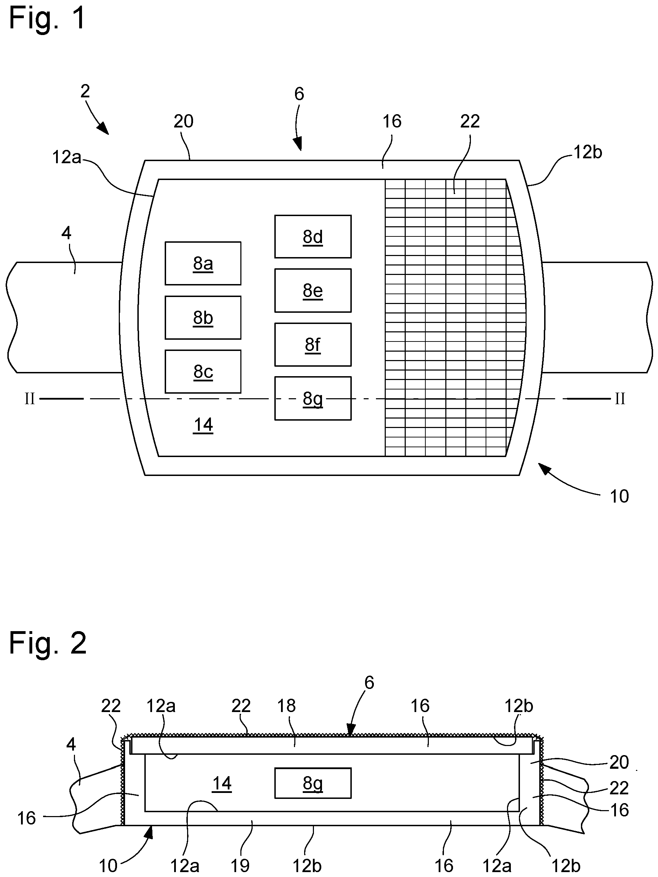

Les figures 1 et 2 représentent une montre 2 comprenant un bracelet 4 et une boîte de montre 6. Sans que cela ne soit limitatif dans le cadre de la présente invention et pour une meilleure compréhension de cette invention, la montre est ici une montre électronique 2 telle qu'une montre à quartz.

Dans ce contexte, la boîte de montre 6 comporte alors de manière classique au moins un composant électrique ou électronique 8a-8g. De manière non limitative et non exhaustive, la boîte de montre 6 comporte sept composants électriques ou électroniques 8a-8g qui constituent des parties sensibles de cette montre 2. Bien entendu, la boîte de montre 6 peut comporter plus de composants électriques ou électroniques que ceux représentés sur ces figures, ou ne peut comporter qu'un sous-ensemble de composants parmi les composants 8a-8g. Dans ces variantes, la boîte de montre 6 comporte ainsi par exemple un dispositif d'affichage 8a, un processeur 8b, une mémoire 8c, un composant de stockage d'énergie 8d, un moteur 8e, un circuit intégré 8f et un oscillateur électronique 8g.

Cette boîte de montre 6 comporte en outre un élément de filtrage optique 22 défini dans tout ou partie d'une face externe notamment visible de ladite boîte 6, ledit élément de filtrage étant apte à transmettre uniquement le spectre électromagnétique visible. Cet élément de filtrage optique 22 est de préférence un filtre interférométrique. Un telle filtre interférométrique est apte à agir comme un élément de blindage vis-à-vis de certaines longueurs d'onde prédéterminées du spectre électromagnétique. La présence d'un tel filtre interférométrique permet de limiter avantageusement la quantité d'énergie radiative pénétrant dans la boîte de montre 6.

Typiquement, ce filtre interférométrique peut être configuré pour ne laisser passer que certaines longueurs d'onde du spectre électromagnétique, par exemple les longueurs d'onde situées dans le domaine visible comprises entre 390 nm et 750 nm, autrement appelées « spectre électromagnétique visible », et pour réfléchir toutes les autres longueurs d'onde du spectre en particulier les longueurs d'ondes relatives à l'infrarouge ou au micro-ondes. Le filtre interférométrique peut être agencé dans ou sur une ou plusieurs parties opaques de la boîte de montre 6, ou dans ou sur une ou plusieurs parties transparentes ou semi-transparentes de cette dernière. Dans l'exemple illustratif de la figure 1, le filtre interférométrique est agencé sur la face externe de la boîte de montre à savoir une surface d'une paroi externe de la carrure et une surface externe de la glace de cette boîte de montre 6. Ce filtre interférométrique peut être un grillage ou un treillis formant un revêtement qui est appliqué sur la face externe de la boîte de montre 6. Ce grillage ou treillis présente un maillage dont les dimensions sont telles qu'elles ne laissent passer que certaines longueurs d'onde prédéterminées du spectre électromagnétique, typiquement les longueurs d'onde du domaine visible. Ce grillage ou treillis agit comme une cage de Faraday. En variante non représentée, le filtre interférométrique peut être un filtre plasmonique.

Dans cette montre 2, cette boîte 6 peut comprendre au moins un dispositif de Dewar 10. Ce dispositif de Dewar 10 présente les mêmes propriétés et caractéristiques qu'un tube/vase de Dewar bien connu dans l'état de la technique. Ainsi qu'on le verra par la suite, les propriétés et caractéristiques de ce dispositif de Dewar 10 participent à lui conférer une bonne isolation thermique au regard de températures pouvant régner dans l'environnement extérieur dans lequel il peut être localisé. Ce dispositif comprend un espace de confinement/d'encapsulation qui est ici un volume 14 défini à l'intérieur de ce dispositif 10 et qui est prévu pour recevoir au moins un des dits composants électriques ou électroniques 8a-8g afin qu'il soit isolé thermiquement de l'environnement extérieur. Ce volume 14 est aussi appelé volume 14 de confinement/d'encapsulation. En effet, ce dispositif de Dewar 10 en encapsulant ainsi ces composants électriques ou électroniques 8a-8g de la montre, participe à protéger ces derniers 8a-8g d'éventuelles températures extrêmes présentes à l'extérieur pouvant être comprises entre -150 et +125 degrés Celsius. En complément on notera qu'une telle configuration de la montre permet ainsi d'utiliser des composants électriques ou électroniques standard dans des contextes et des environnements où les températures peuvent être extrêmes, tels que par exemple des missions spatiales ou lunaires. De plus, cette configuration permet aussi d'apporter une rationalisation des coûts de fabrication d'une telle montre ainsi que de maintenir une complexité raisonnable pour les composants utilisés dans la montre pour de telles missions.

Dans cette montre 2, la boîte de montre 6 comporte donc ce dit au moins un dispositif de Dewar 10. Plus précisément, le dispositif de Dewar 10 peut être formé en tout ou partie par la boîte de montre 6. Un tel dispositif de Dewar 10 est préconfiguré pour renfermer au moins un desdits composants électriques ou électroniques 8a-8g. Autrement dit, ce dispositif 10 comprend l'espace 14 (ou volume 14) dans lequel chaque composant 8a-8g peut être agencé en étant encapsulé dans cet espace 14.

Dans une première alternative de cette montre 2 visible sur les figures 1 et 2, le dispositif de Dewar 10 peut renfermer l'ensemble des composants électriques ou électroniques 8a-8g de la montre 2. Dans ce contexte, ce dispositif de Dewar 10 est alors formé par des pièces de la boîte de montre 6 telles que la carrure 20, une glace 18 et un fond 19. L'assemblage de ces pièces participe à réaliser l'espace de confinement 14, ou volume 14 de confinement, de ce dispositif de Dewar 10 prévu pour l'agencement des composants 8a-8g. Ces trois pièces la carrure 20, la glace 18 et le fond 19 peuvent être des pièces distinctes et jointes ensemble par la suite pour construire cette espace d'encapsulation 14 ou volume d'encapsulation 14. De manière alternative, la carrure 20 et le fond 19 de la boîte peuvent former ensemble une pièce monobloc visible sur la figure 2, ladite pièce monobloc définissant une ouverture opposée au fond 19 qui est susceptible d'être refermée par la glace 18 et ce, de manière amovible. D'une autre manière alternative, la carrure 20 et la glace 18 de la boîte de montre 6, peuvent former ensemble une pièce monobloc, ladite pièce monobloc définissant une ouverture opposée à la glace 18 qui est susceptible d'être refermée par le fond 19 et ce, aussi de manière amovible. Dans ces configurations, l'espace 14, ou volume 14est formé entre ces trois pièces. Dans cette première alternative visible sur les figure 1 et 2, ce dispositif de Dewar 10 comporte la paroi interne formée par des parois intérieures de la glace 18, du fond 19 et de la carrure 20, et la paroi externe 12b formée par des parois extérieures de cette glace 18, ce fond 19 et cette carrure 20. Ces parois interne et externe 12a, 12b sont séparées par l'espace 16 sous vide ou quasi-sous vide. En outre, cette paroi interne 12a délimite le volume 14 dans lequel est susceptible d'être agencés les composants électriques ou électroniques 8a-8g.

Dans une deuxième alternative de cette montre 2, non représentée sur les figures, le dispositif de Dewar 10 renferme au moins un des composants électriques ou électroniques 8a-8g de la montre. Dans ce contexte, ce dispositif de Dewar 10 est alors formé par au moins deux pièces qui sont aptes à coopérer ensemble en étant assemblées ensemble pour former ce dispositif 10. De telles pièces comprennent une pièce de cloisonnement de la boîte de montre 6 qui peut avoir une forme particulière afin à la fois :
- de définir en coopérant avec au moins une autre pièce de la boîte de montre 6, un espace 14 de confinement ou d'encapsulation encore appelé volume de confinement ou d'encapsulation, qui tient compte du volume susceptible d'être occupé par le ou les composants 8a-8g, et
- de pouvoir être assemblée avec au moins une autre pièce de la boîte de montre 6, telle que tout ou partie de la paroi intérieure de la carrure 20 de cette boîte 6, ou tout ou partie de la paroi intérieure du fond 19 ou encore aux parois intérieures de ce fond 19 et de cette carrure 20.

Dans cette deuxième alternative, ce dispositif de Dewar 10 a une paroi interne 12a qui est formée par une paroi intérieure d'au moins une autre pièce de la boîte de montre 6 (la glace 18, le fond 19 ou la carrure 20) et d'une paroi intérieure de la pièce de cloisonnement, et la paroi externe 12b est formée quant à elle par une paroi extérieure d'au moins une autre pièce (la glace 18, le fond 19 ou la carrure 20) et une paroi extérieure de la pièce de cloisonnement. Dans cette alternative aussi, ces parois interne et externe 12a, 12b sont séparées par l'espace 16 sous vide ou quasi-sous vide. En outre, cette paroi interne 12a délimite le volume 14 dans lequel est susceptible d'être agencé (s) le ou les composants 8a-8g

Ce dispositif de Dewar 10 de la boîte de montre 6, comprend typiquement deux parois interne et externe minces 12a, 12b imbriquées l'une dans l'autre. Une paroi interne 12a du dispositif 10 délimite l'espace de confinement/d'encapsulation 14 (ou volume de confinement/d'encapsulation 14) à l'intérieur duquel est agencé chaque composant électrique ou électronique 8a-8g. Une paroi externe 12b du dispositif 10 qui selon les variantes peut être agencée du côté extérieur de la montre 2, ou du côté extérieur de la montre 2 et dans l'enceinte de la boîte de montre. Ce dispositif de Dewar 10 définit ainsi un espace vide ou quasi-vide 16 qui sépare la paroi interne 12a de la paroi externe 12b. On comprend bien ici que cet espace 16 est fermé hermétiquement et qu'il est sous vide ou quasi sous vide. Ces parois 12a, 12b sont de préférence réalisées de manière non limitative et non exhaustive en une matière métallique, en verre ou en des résines polymères thermodurcissables ou thermoplastiques renforcées de fibres de carbone ou de verre ou encore en matériaux céramiques.

On notera que lorsque les parois interne et externe 12a, 12b sont transparentes ou semi-transparentes en étant par exemple en verre, la surface extérieure de cette paroi interne 12a et la surface intérieure de cette paroi externe 12b peuvent être revêtues d'un enduit réfléchissant métallique ou similaire, tel que par exemple une couche d'argent.

Dans cette montre 2, la glace 18 de la boîte de montre 6 est formée d'au moins une vitre transparente ou semi-transparente. Lorsque cette glace 18 est comprise dans le dispositif de Dewar 10 c'est-à-dire qu'elle participe à la formation de ce dispositif 10, elle comprend alors des parois intérieure et extérieure qui sont aussi les parois interne et externe 12a, 12b du dispositif de Dewar 10 entre lesquelles parois 12a, 12b est donc aussi défini un espace 16 vide(ou sous-vide) ou quasi-vide (ou quasi sous vide).

Dans ce mode réalisation de l'invention, lorsque la pièce de cloisonnement de la boîte de montre 6, la carrure, la glace et le fond participent à former le dispositif de Dewar 10, alors les parois intérieures et extérieures de cette pièce de cloisonnement, de cette carrure, de la glace et du fond sont aussi les parois interne et externe 12a, 12b du dispositif de Dewar 10 de cette montre 2. On comprend donc que ces parois intérieures et extérieures de la pièce de cloisonnement, de la carrure, de la glace et du fond participent alors à former ensemble les parois interne et externe 12a, 12b du dispositif de Dewar 10.

Un tel dispositif de Dewar 10 et l'élément de filtrage optique 22 fournissent ainsi à la montre 2 une très bonne isolation thermique vis-à-vis de l'environnement extérieur en empêchant en réduisant voire en empêchant une déperdition thermique par radiation du volume d'encapsulation 14 . Ainsi, lorsque la température à l'extérieur de la montre 2 atteint des valeurs extrêmes, typiquement de l'ordre de -125 à +125 °C, la température à l'intérieur de l'espace d'encapsulation 14 (ou volume d'encapsulation 14) reste quant à elle sensiblement égale à la température du milieu ambiant dans lequel l'encapsulation a été effectuée, typiquement de l'ordre de 20 °C. On conçoit ainsi qu'une telle configuration permet de protéger les composants électriques ou électronique 8a-8g de la montre 2, et de permettre ainsi leur fonctionnement dans des conditions de température extérieure extrêmes.

Dans cette boîte de montre 6 qui comprend le dispositif de Dewar 10, on notera que l'élément de filtrage optique 22 est défini dans tout ou partie de la face externe de la boîte de montre 6 notamment dans tout ou partie de la face visible de ladite boîte 6. Cette face visible comprend les partis de la boîte de montre 6 qui sont susceptibles d'être exposées à un rayonnement électromagnétique notamment lorsque la montre 2 est portée par le porteur. Cet élément de filtrage est défini dans tout ou partie de la face externe de la boîte de montre, cette face externe comprenant les parois interne et externe 12a, 12b et l'espace vide ou quasi-vide 16 du dispositif de Dewar 10. Cet élément de filtrage et donc le filtre interférométrique peut être un grillage ou un treillis qui est compris :
- dans un premier aspect sur la surface externe de la paroi interne 12a du dispositif de Dewar 10, ou
- dans un deuxième aspect sur la surface externe de la paroi externe 12b du dispositif de Dewar 10, ou
- dans un troisième aspect sur la surface interne de la paroi interne 12a du dispositif de Dewar 10, ou
- dans un quatrième aspect sur la surface interne de la paroi externe 12b du dispositif de Dewar 10, ou
- dans un cinquième aspect dans la paroi interne 12a du dispositif de Dewar 10, ou
- dans un sixième aspect dans la paroi externe 12b du dispositif de Dewar 10, ou
- dans un septième aspect dans l'espace vide ou quasi-vide 16 du dispositif de Dewar 10, ou
- selon une combinaison de deux ou plusieurs de ces aspects.

## Revendications

1. Montre (2) comprenant un bracelet (4) et une boîte de montre (6) comportant au moins un composant électrique ou électronique (8a-8g), ladite montre comprenant au moins un dispositif de Dewar (10) configuré pour renfermer au moins un desdits composants électriques ou électroniques (8a-8g), ledit au moins un dispositif de Dewar (10) comportant des parois interne et externe (12a, 12b) et un espace sous vide ou quasi-sous vide (16) défini entre ces dites parois (12a, 12b), la paroi interne (12a) délimitant un volume (14) dans lequel est susceptible d'être agencé ledit au moins un composant électrique ou électronique (8a-8g), ladite montre (2) étant **caractérisée en ce qu'**elle comprend également un élément de filtrage optique (22) défini dans tout ou partie d'une face externe notamment visible de ladite boîte (6), ledit élément de filtrage étant apte à ne transmettre que le spectre électromagnétique visible.

2. Montre (2) selon la revendication précédente, **caractérisée en ce que** l'élément de filtrage optique (22) est un filtre interférométrique.

3. Montre (2) selon la revendication précédente, **caractérisée en ce que** le filtre interférométrique comprend un grillage ou un treillis présentant un maillage dont les dimensions sont telles qu'elles ne laissent passer que certaines longueurs d'onde prédéterminées du spectre électromagnétique.

4. Montre (2) selon la revendication 3, **caractérisée en ce que** le filtre interférométrique comprend un filtre plasmonique.

5. Montre (2) selon l'une quelconque des revendications 1 à 4, **caractérisé en ce que** le dispositif de Dewar (10) est formé en tout ou partie par la boîte de montre (6) et renferme au moins un desdits composants électriques ou électroniques (8a-8g).

6. Montre (2) selon l'une quelconque des revendications précédentes, **caractérisée en ce que** le dispositif de Dewar (10) comprend les pièces suivantes de la boîte de montre (6) délimitant ledit volume (14) : une carrure (20), une glace (18) et un fond (19).

7. Montre (2) selon la revendication précédente, **caractérisée en ce que** la carrure (20) et le fond (19) de la boîte forme une pièce monobloc, ladite pièce définissant une ouverture opposée au fond (19) qui est susceptible d'être refermée par la glace (18) de ladite montre notamment de manière amovible.

8. Montre (2) selon la revendication 6, **caractérisée en ce que** la carrure (20) et la glace (18) de la boîte de montre (6) forment une pièce monobloc, ladite pièce définissant une ouverture opposée à la glace (18) qui est susceptible d'être refermée par le fond (19) de ladite montre (2) notamment de de manière amovible.

9. Montre (2) selon l'une quelconque des revendications 1 à 8, **caractérisée en ce que** le dispositif de Dewar (10) comprend deux parois interne et externe minces (12a, 12b) imbriquées l'une dans l'autre, la paroi interne (12a) délimitant le volume (14) à l'intérieur duquel est agencé le ou chaque composant électrique ou électronique (8a-8g), la paroi externe (12b) qui est agencée du côté extérieur de la montre (2), l'espace sous vide ou quasi sous vide (16) séparant la paroi interne (12a) de la paroi externe (12b).

10. Montre (2) selon l'une quelconque des revendications 1 à 9, **caractérisée en ce que** ledit au moins un composant électrique ou électronique (8a-8g) est choisi parmi le groupe consistant en : un dispositif d'affichage, un processeur, une mémoire, un composant de stockage d'énergie, un moteur, un circuit intégré et un oscillateur électronique.

11. Montre (2) selon l'une quelconque des revendications précédentes, **caractérisée en ce que** la montre (2) est une montre à quartz.

## Patentansprüche

1. Uhr (2), umfassend ein Armband (4) und ein Uhrengehäuse (6), mindestens ein elektrisches oder elektronisches Bauteil (8a-8g) aufweist, wobei die Uhr mindestens eine Dewar-Vorrichtung (10) umfasst, die dazu eingerichtet ist, mindestens eines der elektrischen oder elektronischen Bauteile (8a-8g) zu verschließen, wobei die mindestens eine Dewar-Vorrichtung (10) Innen- und Außenwände (12a, 12b) und einem zwischen diesen Wänden (12a, 12b) definierten luftleeren oder nahezu luftleeren Raum (16) aufweist, wobei die Innenwand (12a) ein Volumen (14) begrenzt, in dem das mindestens eine elektrische oder elektronische Bauteil (8a-8g) angeordnet werden kann, wobei die Uhr (2) **dadurch gekennzeichnet ist, dass** sie außerdem ein optisches Filterelement (22) umfasst, das in der Gesamtheit oder einem Teil einer besonders sichtbaren Außenfläche des Gehäuses (6) definiert ist, wobei das Filterelement dazu ausgelegt ist, nur das sichtbare elektromagnetische Spektrum durchzulassen.

2. Uhr (2) nach dem vorhergehenden Anspruch, **dadurch gekennzeichnet, dass** das optische Filterelement (22) ein interferometrischer Filter ist.

3. Uhr (2) nach dem vorhergehenden Anspruch, **dadurch gekennzeichnet, dass** der interferometrische Filter ein Gitter oder Geflecht mit einer Maschenweite aufweist, deren Abmessungen derart sind, dass sie nur bestimmte vorbestimmte Wellenlängen des elektromagnetischen Spektrums durchlassen.

4. Uhr (2) nach Anspruch 3, **dadurch gekennzeichnet, dass** der interferometrische Filter einen plasmonischen Filter umfasst.

5. Uhr (2) nach einem der Ansprüche 1 bis 4, **dadurch gekennzeichnet, dass** die Dewar-Vorrichtung (10) ganz oder teilweise durch das Uhrengehäuse (6) gebildet ist und mindestens eines der elektrischen oder elektronischen Bauteile (8a-8g) verschließt.

6. Uhr (2) nach einem der vorhergehenden Ansprüche, **dadurch gekennzeichnet, dass** die Dewar-Vorrichtung (10) die folgenden Teile des Uhrengehäuses (6) umfasst, die das Volumen (14) begrenzen: ein Mittelteil (20), ein Glas (18) und einen Grund (19).

7. Uhr (2) nach dem vorhergehenden Anspruch, **dadurch gekennzeichnet, dass** das Mittelteil (20) und der Grund (19) des Gehäuses ein einteiliges Stück bilden, wobei das Stück eine dem Grund (19) gegenüberliegende Öffnung definiert, die durch das Glas (18) der Uhr insbesondere auf abnehmbare Weise verschlossen werden kann.

8. Uhr (2) nach Anspruch 6, **dadurch gekennzeichnet, dass** das Mittelteil (20) und das Glas (18) des Uhrengehäuses (6) ein einteiliges Stück bilden, wobei das Stück eine dem Glas (18) gegenüberliegende Öffnung definiert, die durch den Grund (19) der Uhr (2) insbesondere auf abnehmbare Weise verschlossen werden kann.

9. Uhr (2) nach einem der Ansprüche 1 bis 8, **dadurch gekennzeichnet, dass** die Dewar-Vorrichtung (10) zwei ineinander verschachtelte dünne Innen- und Außenwände (12a, 12b) umfasst, wobei die Innenwand (12a) das Volumen (14), in dessen Inneren der oder jedes elektrische oder elektronische Bauteil (8a-8g) angeordnet ist, die Außenwand (12b), die an der Außenseite der Uhr (2) angeordnet ist, und den luftleeren oder nahezu luftleeren Raum (16) begrenzen, der die Innenwand (12a) von der Außenwand (12b) trennt.

10. Uhr (2) nach einem der Ansprüche 1 bis 9, **dadurch gekennzeichnet, dass** das mindestens eine elektrische oder elektronische Bauteil (8a-8g) ausgewählt ist aus der Gruppe bestehend aus: einer Anzeigevorrichtung, einem Prozessor, einem Speicher, einer Energiespeicherkomponente, einem Motor, einem integrierten Schaltkreis und einem elektronischen Oszillator.

11. Uhr (2) nach einem der vorhergehenden Ansprüche, **dadurch gekennzeichnet, dass** die Uhr (2) eine Quarzuhr ist.

## Claims

1. A watch (2) comprising a bracelet (4) and a watch case (6) including at least one electrical or electronic component (8a-8g), said watch comprising at least one Dewar device (10) configured to enclose at least one of said electrical or electronic components (8a-8g), said at least one Dewar device (10) including inner and outer walls (12a, 12b) and a vacuum or quasi-vacuum space (16) defined between these called walls (12a, 12b), the inner wall (12a) delimiting a volume (14) in which said at least one electrical or electronic component (8a-8g) is likely to be arranged, said watch (2) **characterised in that** it also comprises an optical filtering element (22) defined in all or part of a particularly visible outer face of said case (6), said filtering element being capable of transmitting only the visible electromagnetic spectrum.

2. The watch (2) according to the preceding claim, **characterised in that** the optical filtering element (22) is an interferometric filter.

3. The watch (2) according to the preceding claim, **characterised in that** the interferometric filter comprises a grid or a lattice having a mesh whose dimensions are such that they only allow certain predetermined wavelengths of the electromagnetic spectrum to pass.

4. The watch (2) according to claim 3, **characterised in that** the interferometric filter comprises a plasmonic filter.

5. The watch (2) according to any one of claims 1 to 4, **characterised in that** the Dewar device (10) is formed in all or part by the watch case (6) and encloses at least one of said electrical or electronic components (8a-8g).

6. The watch (2) according to any one of the preceding claims, **characterised in that** the Dewar device (10) comprises the following parts of the watch case (6) delimiting said volume (14): a middle (20), a crystal (18) and a bottom (19).

7. The watch (2) according to the preceding claim, **characterised in that** the middle (20) and the bottom (19) of the case form a one-piece part, said part defining an opening opposite to the bottom (19) which is likely to be closed by the crystal (18) of said watch in particular in a removable manner.

8. The watch (2) according to claim 6, **characterised in that** the middle (20) and the crystal (18) of the watch case (6) form a one-piece part, said part defining an opening opposite to the crystal (18) which is likely to be closed by the bottom (19) of said watch (2) in particular in a removable manner.

9. The watch (2) according to any one of claims 1 to 8, **characterised in that** the Dewar device (10) comprises two thin inner and outer walls (12a, 12b) nested one inside the other, the inner wall (12a) delimiting the volume (14) inside which the or each electrical or electronic component (8a-8g) is arranged, the outer wall (12b) which is arranged on the outer side of the watch (2), the vacuum or quasi-vacuum space (16) separating the inner wall (12a) from the outer wall (12b).

10. The watch (2) according to any one of claims 1 to 9, **characterised in that** said at least one electrical or electronic component (8a-8g) is selected from the group consisting of: a display device, a processor, a memory, an energy storage component, a motor, an integrated circuit and an electronic oscillator.

11. The watch (2) according to any one of the preceding claims, **characterised in that** the watch (2) is a quartz watch.
